# EUROPÄISCHE PATENTANMELDUNG

(11) **EP 1 224 967 A2**
(43) Veröffentlichungstag der Anmeldung: **24.07.2002**
(21) Anmeldenummer: 02000880.1
(22) Anmeldetag: 15.01.2002
(51) Int. Cl.: B01J 19/24

(54) **Reaktor**

(30) Priorität: 22.01.2001 DE 10102726
(71) Anmelder: Vodafone Pilotentwicklung GmbH, 81549 München (DE)
(72) Erfinder: Hausinger, Günter, Dr., 82131 Gauting (DE); Bartsch, Armin, Dr., 81927 München (DE)
(74) Vertreter: Müller, Thomas

(57) **Zusammenfassung**

Es wird beschrieben ein Reaktor (10) mit wenigstens einem Reaktorelement (11, 12), das aus wenigstens zwei funktionalen Einheiten (20, 30) mit einer Kanalstruktur, die von wenigstens einem Medium durchströmbar sind oder durchströmt werden, ausgebildet ist, mit wenigstens einer ersten funktionalen Einheit (20), die eine Anzahl von Kanälen (21) aufweist und mit wenigstens einer zweiten funktionalen Einheit (30), die eine Anzahl von Kanälen (31) aufweist. Um einen Reaktor mit möglichst wenig Platzbedarf bei gleichzeitig optimaler Reaktorleistung zu schaffen, ist erfindungsgemäß vorgesehen, daß jeder Kanal (21) der ersten funktionalen Einheit(en) (20) über seine Längsausdehnung (L) eine Anzahl von Verbindungsstellen (22) zur Verbindung mit einem oder mehreren KanaI/Kanälen (31) der wenigstens einen zweiten funktionalen Einheit (30) aufweist, über die ein Austausch von Medium zwischen den Kanälen (21, 31) der ersten (20) und zweiten (30) funktionalen Einheit(en) stattfindet oder stattfinden kann. Dabei sind die Kanäle (21) der ersten funktionalen Einheit(en) (20) in eine Anzahl von von wenigstens zwei Verbindungsstellen (22) begrenzten Kanalabschnitten (25) aufgeteilt.

## Beschreibung

Die vorliegende Erfindung betrifft einen Reaktor gemäß dem Oberbegriff von Patentanspruch 1 sowie besondere Verwendungen für einen solchen Reaktor.

Reaktoren sind grundsätzlich bekannt und werden in unterschiedlichsten Ausgestaltungsformen für verschiedenste Anwendungen eingesetzt.

Eine bekannte Ausgestaltungsvariante für Reaktoren sieht vor, daß diese wenigstens ein Reaktorelement aufweisen, das wiederum als Schichtenfolge von wenigstens zwei Schichten mit einer Kanalstruktur ausgebildet ist. Jede dieser Schichten weist eine Anzahl von Kanälen auf, die von wenigstens einem Medium durchströmbar sind oder durchströmt werden. Reaktoren der genannten Art können beispielsweise als katalytische Brenner, als Wärmetauscher oder dergleichen eingesetzt werden.

Wird ein derartiger Reaktor als katalytischer Brenner betrieben, sind die Kanäle üblicherweise mit einem Katalysatormaterial beschichtet. Wenn die Kanäle nun von einem Medium, welches mit dem Katalysatormaterial reagiert, durchströmt werden, findet in den Kanälen eine Reaktion statt, die in der Regel exotherm ist, so daß der Reaktor die auf diese Weise entstandene Wärme für andere Prozesse beziehungsweise Verbraucher zur Verfügung stellen kann.

Wenn ein Reaktor der genannten Art als Wärmetauscher eingesetzt wird, kann eine Schicht, beziehungsweise deren Kanäle, von einem zu erwärmenden Medium durchströmt werden, während die andere Schicht, beziehungsweise deren Kanäle, von einem Wärmeträgermedium durchströmt wird. Während die beiden Medien in den benachbarten Schichten aneinander vorbeiströmen, gibt das Wärmeträgermedium die Wärme an das zu erwärmende Medium ab, so daß sich dieses erwärmt.

Die Bauweise der bekannten Reaktoren, beziehungsweise die Konfiguration der Kanäle, in Querschnitt und Länge hängt üblicherweise von der Menge und der Geschwindigkeit des die Kanäle durchströmenden Mediums sowie vom erforderlichen Umsatz, beispielsweise dem Reaktionsumsatz, der Wärmeaustauschrate und dergleichen, ab.

Beim Einsatz der bekannten Reaktoren als Wärmetauscher oder katalytischer Brenner gilt allgemein der folgende Grundsatz: die Leistungsfähigkeit des Reaktors kann dadurch erhöht werden, daß beispielsweise die Durchströmrate des Mediums erhöht wird. Dabei müssen in der Regel die Kanäle des Reaktors entsprechend verlängert werden. Dies führt jedoch zu einer Reihe von Problemen. Zum einen bedeutet eine Verlängerung der Kanäle, daß auch der Bauraumbedarf des gesamten Reaktors vergrößert wird. Dies ist für eine ganze Reihe von Anwendungsmöglichkeiten jedoch von erheblichem Nachteil. Zu denken ist hier beispielsweise an Reaktoren, die in Mikrostrukturtechnik ausgebildet sind. Weiterhin kann eine Verlängerung der Kanäle auch zu unerwünschtem Druckverlust führen.

Wenn Reaktoren der genannten Art als katalytische Brenner eingesetzt werden, führen lange Kanäle zu Problemen bei der Umsetzung der katalytischen Reaktionen. Wenn nämlich das Medium in den mit einem Katalysatormaterial beschichteten Kanal eintritt, findet bereits im Eintrittsbereich des Kanals ein Großteil der katalytischen Reaktion statt. Diese heftige Reaktion führt zu einer starken, lokalen Hitzeentwicklung im Eintrittsbereich. Im weiteren Verlauf der Kanäle schwächt sich die Reaktionsstärke immer mehr ab, so daß sich über die Längsausdehnung der Kanäle ein Reaktionsprofil einstellt, das am Kanaleintritt sehr hoch ist und mit zunehmender Entfernung vom Kanaleintritt immer mehr abnimmt. Eine homogene Reaktion über die gesamte Länge der Kanäle ist somit nicht realisierbar, so daß üblicherweise nicht der gesamte Kanal für die darin stattfindende Reaktion ausgenutzt werden kann.

Es besteht daher das Bedürfnis, Reaktoren der genannten Art diesbezüglich zu optimieren.

In der EP-A 1 010 462 ist ein Reaktor zur katalytischen Umsetzung eines Ausgangsstoffes beschrieben, bei dem einzelne, hintereinander geschaltete Reaktorelemente als Schichtenfolge von einer Anzahl Schichten mit einer Kanalstruktur ausgebildet sind. Die Kanäle sind mit einem katalytischen Material beschichtet, so daß ein Gasgemisch, das die Kanäle durchströmt, mit dem katalytischen Material in Wirkverbindung bringbar ist. Um einen bei der katalytischen Umsetzung auftretenden Druckverlust zu verringern und um zu erreichen, daß im Reaktor eine große Umsetzung erfolgt, wird gemäß dieser bekannten Lösung vorgeschlagen, das Bauvolumen des gesamten Reaktors zu verringern und gleichzeitig das Katalysatorvolumen zu erhöhen. Dies wird erreicht, indem der Reaktor verschiedene Reaktionszonen (Reaktorelemente) mit unterschiedlichen Kanaldichten aufweist. Dabei nimmt die Kanaldichte in Strömungsrichtung des Gasgemischs, das heißt vom Eintrittsbereich des Reaktors in Richtung des Austrittsbereichs des Reaktors gesehen, zu. Dies wird dadurch erreicht, daß die Kanalquerschnitte in den jeweiligen Reaktionszonen kleiner werden.

Ausgehend vom genannten Stand der Technik liegt der vorliegenden Erfindung die Aufgabe zu Grunde, eine weitere Lösung für einen Reaktor bereitzustellen, mit dem die im Hinblick auf den Stand der Technik beschriebenen Nachteile wirkungsvoll verhindert werden können. Insbesondere soll ein Reaktor der eingangs genannten Art derart weitergebildet werden, daß dieser bei möglichst geringem Platzbedarf dennoch optimale Eigenschaften aufweist.

Diese Aufgabe wird gelöst durch den Reaktor gemäß Patentanspruch 1 sowie die erfindungsgemäßen Verwendungen gemäß Patentanspruch 23, 24 und 25. Weitere Vorteile, Merkmale, Aspekte, Details und Effekte der Erfindung ergeben sich aus den abhängigen Patentansprüchen, der Beschreibung sowie den Zeichnungen. Merkmale und Details der Erfindung, die im Zusammenhang mit dem erfindungsgemäßen Reaktor beschrieben sind, gelten ebenso für die erfindungsgemäße Verwendung und umgekehrt.

Gemäß dem ersten Aspekt der Erfindung wird ein Reaktor bereitgestellt, mit wenigstens einem Reaktorelement, das aus wenigstens zwei funktionalen Einheiten mit einer Kanalstruktur, die von wenigstens einem Medium durchströmbar sind oder durchströmt werden, ausgebildet ist, mit wenigstens einer ersten funktionalen Einheit, die eine Anzahl von Kanälen aufweist und mit wenigstens einer zweiten funktionalen Einheit, die eine Anzahl von Kanälen aufweist. Der Reaktor ist erfindungsgemäß dadurch gekennzeichnet, daß jeder Kanal der ersten funktionalen Einheit(en) über seine Längsausdehnung eine Anzahl von Verbindungsstellen zur Verbindung mit einem oder mehreren Kanal/Kanälen der wenigstens einen zweiten funktionalen Einheit aufweist, über die ein Austausch von Medium zwischen den Kanälen der ersten und zweiten funktionalen Einheit(en) stattfindet oder stattfinden kann. Die Kanäle der ersten funktionalen Einheit(en) sind in eine Anzahl von von wenigstens zwei Verbindungsstellen begrenzten Kanalabschnitten aufgeteilt.

Durch die erfindungsgemäße Ausgestaltung des Reaktors wird zunächst eine besonders platzsparende und damit bauraumoptimierte Lösung geschaffen. Dies liegt generell daran, daß die einzelnen Kanäle der ersten funktionalen Einheit(en) nunmehr in eine Anzahl von Kanalabschnitten aufgeteilt sind, wobei die Verbindung zwischen den einzelnen Kanalabschnitten und den Kanälen der zweiten funktionalen Einheit derart erfolgt, daß die im Zusammenhang mit dem Reaktor gewünschten Reaktionen, beziehungsweise Funktionen, in den einzelnen Kanalabschnitten optimal ablaufen können. Wie dies im einzelnen geschehen kann, wird im weiteren Verlauf der Beschreibung näher erläutert.

Dabei bilden jeweils solche Kanäle eine funktionale Einheit, die im Reaktor jeweils die gleiche Funktion haben. Dabei müssen die Kanäle der einzelnen funktionalen Einheiten nicht unbedingt in einer Ebene liegen. Eine gleiche Funktion ist beispielsweise dann gegeben, wenn die Kanäle von gleichen oder gleichartigen Medien, etwa von Ausgangsprodukten, einzelnen Reaktionspartnern, die anschließend gemischt werden und dergleichen, durchströmt werden, wenn die Kanäle einer gleichen Hierarchiestufe angehören, was im weiteren Verlauf der Beschreibung noch näher erläutert wird, wenn die Kanäle übereinstimmende konstruktive Merkmale aufweisen, etwa in Größe und Form oder wenn in den Kanälen jeweils die gleiche Reaktion abläuft. Diese Beispiele sind selbstverständlich rein exemplarischer Natur und dienen lediglich zur Verdeutlichung des Begriffs "funktionale Einheit", so daß die Erfindung nicht auf die genannten Beispiele beschränkt ist.

In einer vorteilhaften Ausgestaltung können die wenigstens zwei funktionalen Einheiten als Schichtenfolge von wenigstens zwei Schichten ausgebildet sein, mit wenigstens einer ersten Schicht, die eine Anzahl von Kanälen aufweist und mit wenigstens einer zweiten Schicht, die eine Anzahl von Kanälen aufweist.

Gemäß einem Grundgedanken der Erfindung ist zunächst vorgesehen, daß jeder Kanal der ersten funktionalen Einheit(en) über seine Längsausdehnung eine Anzahl von Verbindungsstellen zur Verbindung mit einem oder mehreren Kanal/Kanälen der wenigstens einen zweiten funktionalen Einheit aufweist. Dabei ist die Erfindung nicht auf eine bestimmte Art von Verbindung zwischen den einzelnen Kanälen beschränkt. Einige nicht ausschließliche Beispiele, wie derartige Verbindungen, beziehungsweise Verbindungsstellen, realisiert sein könnten, werden im weiteren Verlauf der Beschreibung näher erläutert. Die Kanäle der ersten funktionalen Einheit werden beispielsweise von den Kanälen der zweiten funktionalen Einheit angesteuert.

Dies kann beispielsweise derart erfolgen, daß ein Medium, welches die Kanäle der zweiten funktionalen Einheit durchströmt, über entsprechende Verbindungsstellen in die Kanäle der ersten funktionalen Einheit eintreten kann. Dabei kann natürlich auch vorgesehen sein, daß benachbarte Kanäle der zweiten funktionalen Einheit(en) auch von unterschiedlichen Medien durchströmt werden. Ebenso ist es selbstverständlich denkbar, das Medium aus den ersten Kanälen über entsprechende Verbindungsstellen auch aus diesen austreten und in entsprechende Kanäle der zweiten funktionalen Einheit(en) eintreten kann. Über die Verbindungsstellen ist somit ein Austausch von Medium zwischen den Kanälen der ersten und zweiten funktionalen Einheit(en) möglich.

Gemäß einem weiteren Grundgedanken der Erfindung ist vorgesehen, daß die Kanäle der ersten funktionalen Einheit(en) in eine Anzahl von von wenigstens zwei Verbindungsstellen begrenzten Kanalabschnitten aufgeteilt sind. Im einfachsten Fall wird ein Kanalabschnitt von zwei Verbindungsstellen begrenzt. Dann bildet eine Verbindungsstelle beispielsweise einen Medium-Einlaß, während die andere Verbindungsstelle einen Medium-Auslaß bildet. Es ist jedoch auch denkbar, daß sich ein Kanalabschnitt über mehrere Verbindungsstellen erstreckt. In diesem Fall kann es pro Kanalabschnitt beispielsweise mehrere Medium-Einlässe und/oder Medium-Auslässe geben.

In einer vorteilhaften Ausgestaltung kann beispielsweise vorgesehen sein, daß zwei in Längsausdehnung eines Kanals der ersten funktionalen Einheit(en) hintereinander liegende Verbindungsstellen jeweils einen Medium-Einlaß beziehungsweise einen Medium-Auslaß bilden. Das bedeutet, daß ein Medium, das aus dem Kanal einer zweiten funktionalen Einheit über eine Verbindungsstelle, die in diesem Fall als Medium-Einlaß fungiert, in einen Kanal der ersten funktionalen Einheit(en) eintritt, sich anschließend in diesem Kanal weiterbewegt bis die nächste Verbindungsstelle erreicht wird. Über diese Verbindungsstelle, die in diesem Fall als Medium-Auslaß fungiert, tritt das Medium aus dem Kanal der ersten funktionalen Einheit(en) wieder aus.

Beispielsweise kann das Medium erneut in einen Kanal einer zweiten funktionalen Einheit eintreten. Dies ist jedoch nicht zwingend vorgeschrieben, so daß das Medium selbstverständlich über die entsprechende Verbindungsstelle auch anderswohin austreten kann.

Zwischen dem auf diese Weise gebildeten Medium-Einlaß und Medium-Auslaß wird nunmehr ein Kanalabschnitt des Kanals der ersten funktionalen Einheit(en) gebildet.

Während des Betriebs des Reaktors können die einzelnen Medium-Einlässe und Medium-Auslässe vorteilhaft je nach Bedarf dynamsich zugewiesen werden. Das bedeutet, daß diese in sich ändernder Weise je nach Bedarf ab-, zu- und umgeschaltet werden können, so daß sich Kanalabschnitte unterschiedlicher Ausprägungen ergeben können.

Die erfindungsgemäße Ausgestaltung des Reaktors weist eine Reihe von Vorteilen auf. Durch die Aufteilung der Kanäle der ersten funktionalen Einheit(en) in jeweils eine Anzahl von Kanalabschnitten, die wiederum von Kanälen der zweiten funktionalen Einheit(en) angesteuert werden, wird zunächst ein möglicher Druckverlust in den Kanälen minimiert. Weiterhin kann die Verweildauer des Mediums in den Kanälen der ersten funktionalen Einheit(en) sehr kurz gehalten werden, da das Medium nur die kurzen Kanalabschnitte des jeweiligen Kanals durchströmen muß beziehungsweise kann. Dies ist besonders vorteilhaft bei gesteuerten Reaktionen, wie beispielsweise katalytischen Reaktionen oder dergleichen.

Durch die erfindungsgemäße Ausgestaltung des Reaktors ist jeder Teilbereich der Kanäle der ersten funktionalen Einheit(en) optimal für die verschiedenen Reaktionen ausgenutzt. Zum einen wird erreicht, daß die Kanäle der ersten funktionalen Einheit(en) nunmehr über eine große Anzahl von Kontaktzentren verfügen, wobei jeder Kanalabschnitt ein solches Kontaktzentrum bildet. Das die Kanäle der ersten funktionalen Einheit(en) durchströmende Medium befindet sich nur für einen sehr kurzen Kontaktzeitraum innerhalb des jeweiligen Kanalabschnitts. Im Vergleich zu den aus dem Stand der Technik bekannten Lösungen können somit nunmehr die Kanäle der ersten funktionalen Einheit(en) über ihre Gesamtlänge, das heißt über ihre gesamte Längsausdehnung, für die gewünschten Reaktionen ausgenutzt werden. Ein wie im Hinblick auf den im Stand der Technik genannten katalytischen Brenner auftretendes nachteiliges Reaktionsprofil kann beim erfindungsgemäßen Reaktor vermieden werden.

Dies soll an Hand zweier nicht ausschließlicher Beispiele kurz erläutert werden.

Wenn der erfindungsgemäße Reaktor beispielsweise als katalytischer Brenner eingesetzt werden soll, bestand bisher das Problem, daß die katalytische Reaktion beim Eintritt des Mediums in den Kanal besonders stark war und im weiteren Strömungsverlauf des Mediums durch den Kanal in Richtung des Kanalaustritts immer mehr abnahm. Durch die erfindungsgemäße Ausgestaltung des Reaktors wird nunmehr erreicht, daß durch die Aufteilung der Kanäle in einzelne Kanalabschnitte eine Situation geschaffen wird, indem die einzelnen Kanäle funktional quasi in eine Anzahl von "Eintrittsbereichen" aufgeteilt werden. Dies führt zu einer besonders guten katalytischen Reaktion über die gesamte Längsausdehnung der Kanäle.

Wenn der erfindungsgemäße Reaktor beispielsweise als Wärmetauscher eingesetzt wird, werden die einzelnen Kanalquerschnitte der jeweiligen funktionalen Einheit(en) derart gewählt, daß ein guter Wärmeaustausch entsteht und durch die Kanalstruktur Druckverluste klein gehalten werden können. Beispiele für geeignete Ausgestaltungsformen der Kanäle werden im weiteren Verlauf der Beschreibung näher erläutert.

Wenn ein solcher Wärmetauscher beispielsweise mit einem chemischen Reaktor verknüpft ist, in dem exotherme Reaktionen stattfinden, kann die im chemischen Reaktor entstehende Wärme durch die Bildung der Kanalabschnitte in den Kanälen der ersten funktionalen Einheit(en) besonders effizient abgeführt werden.

Wenn der erfindungsgemäße Reaktor beispielsweise als Wärmetauscher in Form eines Kühlers eingesetzt wird, kann auf ähnliche Weise eine gute und homogene Temperaturverteilung über die gesamte Längsausdehnung der Kanäle erzeugt werden. Auf diese Weise ließe sich ein entsprechender Wärmetauscher beispielsweise besonders gut zum Kühlen von Bauteilen einsetzen, beispielsweise zur Kühlung von Halbleiterelementen oder dergleichen.

Der erfindungsgemäße Reaktor ist zum einen besonders einfach und platzsparend herstellbar und kann zum anderen universell eingesetzt werden. Die vorliegende Erfindung ist somit nicht auf bestimmte Einsatzmöglichkeiten für den Reaktor beschränkt. Bei den im Rahmen der Beschreibung erläuterten Beispielen handelt es sich somit lediglich um nicht ausschließliche, den Schutzbereich der Erfindung nicht eingrenzende Ausführungsbeispiele.

Weiterhin ist der erfindungsgemäße Reaktor nicht auf eine bestimmte Ausgestaltung oder Anordnung der Kanäle in den einzelnen funktionalen Einheiten beschränkt. Vielmehr kann die Kanalstruktur jede beliebige Dimensionierung haben. Insbesondere können die einzelnen Kanäle jede beliebige Größe und Querschnittsform aufweisen. Auf diese Weise läßt sich der erfindungsgemäße Reaktor auf besonders einfache und effektive Weise an jede mögliche Anwendungsform anpassen.

Vorteilhaft kann zumindest zwischen einzelnen Kanalabschnitten der Kanäle der ersten funktionalen Einheit(en) eine Trennwand vorgesehen sein. Dadurch lassen sich bei bestimmten Anwendungen die Strömungscharakteristika weiter verbessern.

Ebenso ist die Erfindung nicht auf eine bestimmte Anzahl von funktionalen Einheiten pro Reaktorelement beschränkt. Vorstehend wurde der Reaktor bisher in einer Weise beschrieben, daß das wenigstens eine Reaktorelement zwei funktionale Einheiten mit jeweils einer Kanalstruktur aufweist. Ebenso ist es jedoch auch denkbar, daß das Reaktorelement drei oder mehr funktionale Einheiten aufweist.

Vorzugsweise kann das Reaktorelement wenigstens eine dritte funktionale Einheit mit einer Anzahl von Kanälen aufweisen, wobei jeder Kanal der zweiten funktionalen Einheit(en) über seine Längsausdehnung eine Anzahl von Verbindungsstellen zur Verbindung mit einem oder mehreren Kanal/Kanälen der wenigstens einen dritten funktionalen Einheit aufweist, über die ein Austausch von Medium zwischen den Kanälen der zweiten und dritten funktionalen Einheit(en) stattfindet oder stattfinden kann.

Dabei können die einzelnen Verbindungsstellen zwischen den zweiten und dritten funktionalen Einheiten in vorteilhafter Ausgestaltung jeweils nur als Medium-Einlässe oder Medium-Auslässe fungieren. Allerdings können zwei in Längsausdehnung eines Kanals der zweiten funktionalen Einheit(en) hintereinander liegende Verbindungsstellen auch einen Medium-Einlaß und einen Medium-Auslaß bilden. Zumindest zwei Verbindungsstellen können wiederum jeweils einen Kanalabschnitt der Kanäle der zweiten funktionalen Einheit(en) begrenzen.

Auf gleiche Weise ist es denkbar, daß das Reaktorelement noch weitere funktionale Einheiten aufweist.

Vorteilhaft kann der Reaktor zwei oder mehr Reaktorelemente aufweisen. Diese Reaktorelemente können beispielsweise hintereinander geschaltet werden. Ebenso ist es denkbar, daß die einzelnen Reaktorelemente übereinander, beispielsweise sandwichartig, angeordnet sind. Die geeignete Verknüpfung der einzelnen Reaktorelemente innerhalb des Reaktors ergibt sich je nach Bedarf und Anwendungsfall, beispielsweise nach dem zur Verfügung stehenden Bauraum und/oder dem Einsatzgebiet des Reaktors.

Vorteilhaft kann zwischen den beiden Reaktorelementen eine Membran vorgesehen sein. In einem solchen Fall ist der Reaktor als sogenannter Membranreaktor ausgebildet. Bei einem solchen Membranreaktor ist nunmehr ein Masseaustausch möglich.

Bekannte Membranreaktoren bestanden bisher beispielsweise aus einem Rohr aus einem porösen Material, etwa einem Keramikrohr oder Metallrohr. Durch dieses Rohr strömt ein Gas, beispielsweise ein wasserstoffreiches Gas. Mit Hilfe des Membranreaktors ist es nun möglich, einzelne Bestandteile dieses Gases abzutrennen. Dazu tritt das Gas durch die poröse Wandung des Rohrs hindurch. Da das Rohr innen und/oder außen mit einer für den abzutrennenden Bestandteil des Gases selektiv durchlässigen Beschichtung versehen ist, kann der abzutrennende Bestandteil des Gases durch die Beschichtung, die in diesem Fall die Membran bildet, hindurchtreten, während die übrigen Bestandteile des Gases am Durchtritt durch die Membran gehindert werden.

Derartige bekannte Membranreaktoren weisen jedoch eine Reihe von Nachteilen auf. So kann die selektiv gasdurchlässige Beschichtung nur unter schwierigen Bedingungen auf das Rohr aufgebracht werden. Weiterhin treten häufig Dichtigkeitsprobleme auf. Durch die Keramik kann es weiterhin zu Diffusionsbehinderungen kommen.

Diese Probleme können nunmehr umgangen werden, da die selektiv gasdurchlässige Membran zwischen den beiden Reaktorelementen, insbesondere zwischen zwei funktionalen Einheiten der Reaktorelemente, etwa zwei entsprechend ausgebildeten Schichten, angeordnet ist. Ein besonderer Vorteil der Ausgestaltung besteht darin, daß die Membran nunmehr nicht mehr aufgetragen werden muß, sondern beispielsweise eingespannt werden kann oder dergleichen.

Vorteilhaft ist die Membran zwischen zwei ersten funktionalen Einheiten der jeweiligen Reaktorelemente vorgesehen, wobei die Kanäle der ersten funktionalen Einheiten vorzugsweise in Richtung der Membran offen sind. Insbesondere können die Kanäle zumindest bereichsweise deckungsgleich sein, so daß ein optimaler Austausch über die Membran stattfinden kann. Die Gestaltung der Kanäle, beispielsweise der Kanalgeometrien, kann vorteilhaft so gewählt werden, daß die Diffusionsvorgänge optimiert werden.

Die Membran kann beispielsweise als Folie, plattenförmig oder dergleichen ausgebildet sein.

Die Erfindung ist nicht auf bestimmte Membran-Materialien beschränkt. Vielmehr hängt die Auswahl eines geeigneten Materials von der Aufgabenstellung der Membran ab, insbesondere davon, für welche Materialien die Membran durchlässig sein soll. Die Membran kann beispielsweise aus Palladium (Pd) oder einer Pd-Legierung bestehen. In diesem Fall wäre die Membran selektiv durchlässig für Wasserstoff. Wenn die Membran beispielsweise aus einer Keramik hergestellt ist, kann sie selektiv für Sauerstoff durchlässig sein. Ebenso ist es denkbar, daß die Membran aus einem Kunststoff, aus einem kohlehaltigen Material, aus einem anderen Metall, aus einem Metallschaum oder dergleichen hergestellt ist.

Die Membran kann je nach Bedarf weiterhin katalytisch oder nicht katalytisch sein. Im erstgenannten Fall kann die Membran beispielsweise mit einem Katalysatormaterial beschichtet sein. Vorteilhaft können auch die Kanäle mit einem Katalysatormaterial versehen sein. Je nach Größe der Kanäle kann das Katalysatormaterial als Schüttgut innerhalb der Kanäle, als katalytische Beschichtung der Kanalwände und dergleichen vorgesehen sein.

Die Membran kann auf beliebige Weise an den Reaktorelementen befestigt werden. Hier sind unter anderem Klebeverbindungen, Schweißverbindungen, insbesondere mittels Diffusionsschweißen, Lötverbindungen, Klemmverbindungen und dergleichen denkbar. Die Erfindung ist nicht auf die genannten Beispiele beschränkt.

Ein derart ausgebildeter Membranreaktor kann auf verschiedenste Weisen eingesetzt werden. So kann er beispielsweise zum Reinigen von Gasen, zur Gastrennung, zur Trocknung oder Befeuchtung von Gasen verwendet werden. Im letztgenannten Fall ist die Membran möglichst gasdicht, jedoch feuchtigkeitsdurchlässig ausgebildet. Auch kann ein entsprechend ausgebildeter Membranreaktor beispielsweise als Brennstoffzelle verwendet werden.

Vorzugsweise können die Kanäle der ersten und zweiten funktionalen Einheit(en) sowie fakultativ der dritten funktionalen Einheit(en) oder jeder weiteren funktionalen Einheit in Kreuzstrom-Bauweise, in Parallelstrom-Bauweise oder in einem Winkel zueinander ausgerichtet sein. Natürlich ist es auch denkbar, daß die einzelnen Reaktorelemente selbst in der genannten Weise zueinander ausgerichtet sind.

Insbesondere die Ausrichtung in Kreuzstrom-Bauweise ermöglicht ein besonders einfaches Ansteuern des Reaktors, weil die Zu- und Abflüsse der jeweiligen Kanalstrukturen einfach auf verschiedene Seiten des Reaktors gelegt werden können. Dies ist unter anderem dann relevant, wenn mehrere Reaktorelemente gestapelt werden sollen, oder aber der Reaktor eine bestimmte Baugröße nicht überschreiten darf, etwa wenn dieser in Mikrostrukturtechnik ausgebildet ist, was weiter unten noch näher erläutert wird.

Vorzugsweise können die Kanäle der ersten und zweiten funktionalen Einheit(en) und fakultativ der dritten funktionalen Einheit(en) direkt aneinander anliegen, wobei die Verbindungsstellen als Öffnungen zwischen den Kanälen ausgebildet sind. Es ist jedoch auch denkbar, die Verbindungsstellen in Form von Verbindungskanälen oder Kanaldurchführungen auszubilden. In diesem Fall müssen die Kanäle der zu verbindenden funktionalen Einheiten nicht direkt aneinander anliegen.

In weiterer Ausgestaltung ist es möglich, daß die Kanäle der ersten und zweiten funktionalen Einheit(en) und fakultativ der dritten funktionalen Einheit(en) zur Bildung einer hierarchischen Struktur unterschiedlich groß ausgebildet sind. Eine derartige Ausgestaltung ist vorteilhaft so ausgestaltet, daß kleinere Kanäle immer von größeren Kanälen angesteuert werden, wodurch sich ein möglicherweise auftretender Druckverlust optimal verhindern, mindestens jedoch minimieren läßt. Insbesondere dann, wenn die kleineren Kanäle in wie oben beschriebener Weise aus einer Anzahl von Kanalabschnitten gebildet sind, werden viele kleine, kürzere Kanäle von weniger größeren Kanälen angesteuert. Diese Ansteuerung der Kanäle erfolgt dabei in Aufbau und Funktion etwa nach dem Prinzip einer menschlichen Lunge. Auch bei einer Lunge verästeln sich wenige größere "Kanäle" in viele kürzere, kleinere "Kanäle", wodurch ein Druckverlust beim Ein- und Ausatmen wirkungsvoll verhindert wird.

Die Erfindung ist jedoch nicht auf eine derartige Ausgestaltung der einzelnen Kanäle beschränkt. Vielmehr ist es ebenso möglich, daß die Kanäle der einzelnen funktionalen Einheit(en) jeweils gleich groß und/oder mit gleichem Querschnitt ausgebildet sind.

Vorteilhaft können die Kanäle der zweiten funktionalen Einheit(en) größer als die Kanäle der ersten funktionalen Einheit(en) ausgebildet sein. Wenn der Reaktor zusätzlich zu diesen funktionalen Einheiten noch wenigstens eine weitere, dritte funktionale Einheit aufweist, können die Kanäle der dritten funktionalen Einheit(en) vorteilhaft größer als die Kanäle der zweiten funktionalen Einheit(en) ausgebildet sein.

Vorteilhaft kann jeder Kanal der ersten funktionalen Einheit(en) über jede seiner Verbindungsstellen mit einem einzigen Kanal der zweiten funktionalen Einheit(en) verbunden sein. Wiederum gilt, wenn zusätzlich zu diesen funktionalen Einheiten wenigstens eine weitere, dritte funktionale Einheit vorgesehen ist, daß jeder Kanal der zweiten funktionalen Einheit(en) über jede seiner Verbindungsstellen vorteilhaft mit einem einzigen Kanal der dritten funktionalen Einheit(en) verbunden sein kann.

Vorteilhaft kann das Reaktorelement wenigstens eine funktionale Einheit mit einer Anzahl von Kanälen aufweisen, die sandwichartig zwischen zwei oder mehr zweiten funktionalen Einheiten mit einer Anzahl von Kanälen angeordnet ist/sind. Hier ist es denkbar, daß ein Kanal beziehungsweise zumindest einzelne Kanalabschnitte eines Kanals einer ersten funktionalen Einheit jeweils von zwei Kanälen der zweiten funktionalen Einheiten angesteuert wird/werden. In einer solchen Ausgestaltung kann der Reaktor besonders vorteilhaft als Wärmetauscher fungieren.

In weiterer Ausgestaltung können die Kanäle der zweiten funktionalen Einheit(en) und/oder der dritten funktionalen Einheit(en) in Strömungsrichtung des sie durchströmenden Mediums eine Einlaßseite und eine Auslaßseite aufweisen, wobei jeweils benachbarte Kanäle einer jeden funktionalen Einheit abwechselnd über ein Verschlußelement an der Einlaßseite beziehungsweise der Auslaßseite geschlossen sind. Dadurch wird dem Medium eine gerichtete, definierte Strömungsrichtung vorgegeben.

Die Erfindung ist nicht auf bestimmte Ausführungsformen für die funktionalen Einheiten mit der Kanalstruktur beschränkt. Nachfolgend werden zwei nicht ausschließliche Beispiele beschrieben, wie eine solche Kanalstruktur realisiert werden könnte.

Beispielsweise können die Kanalstrukturen der einzelnen funktionalen Einheiten aus Rohren gebildet sein. In diesem Fall wird jeder einzelne Kanal aus einem Rohr gebildet. Die funktionalen Einheiten können beispielsweise jeweils eine Ebene bilden, in der die jeweiligen Rohre der funktionalen Einheit angeordnet sind. Dies ist aber nicht unbedingt erforderlich.

In anderer Ausgestaltung ist es möglich, daß die einzelnen funktionalen Einheiten des wenigstens einen Reaktorelements plattenförmig ausgebildet sind, wobei die Kanäle innerhalb der Platten oder auf diesen vorgesehen sind. Die Herstellung einer solchen plattenartigen Struktur kann auf verschiedenste Art und Weise erfolgen. Beispielsweise, jedoch nicht ausschließlich, können solche Strukturen hergestellt werden, indem zunächst eine Platte hergestellt wird, in die die Kanäle anschließend eingebracht, beispielsweise eingefräst, werden. Eine solche Ausgestaltung ist beispielsweise dann sinnvoll, wenn die Reaktorelemente flächenmäßig klein sind. Bei größeren Reaktoren kann es beispielsweise vorteilhaft sein, die plattenförmige Struktur derart herzustellen, daß zunächst eine Grundplatte angefertigt wird, auf die die einzelnen Kanalwände anschließend aufgebracht, beispielsweise aufgeschweißt oder dergleichen, werden.

Wie vorstehend bereits erläutert wurde, kann der erfindungsgemäße Reaktor für jede Art von Reaktoren, einschließlich für Großreaktoren, eingesetzt werden. Besonders vorteilhaft kann der erfindungsgemäße Reaktor jedoch als Mikroreaktor ausgebildet sein, wobei die einzelnen Kanäle der einzelnen Schichten jeweils in Mikrostrukturtechnik ausgebildet sind. Durch eine Ausgestaltung in Mikrotechnik wird erreicht, daß auf kleinstem Raum eine große Anzahl von Mikrokanälen vorliegt, deren Breite und Höhe im Submilimeterbereich liegt. Auf diese Weise verfügen solche Reaktoren über hohe spezifische innere Oberflächen, das heißt über ein hohes Verhältnis von Kanaloberfläche zu Kanalvolumen. Weiterhin weisen Mikroreaktoren, wie dies der Name bereits aussagt, bei nur geringstem Platzbedarf eine sehr hohe Leistungsfähigkeit auf.

Gemäß einem weiteren Aspekt der Erfindung kann ein wie vorstehend beschriebener erfindungsgemäßer Reaktor vorteilhaft als Wärmetauscher und/oder katalytischer Brenner und/oder Reformer und/oder Reaktor für die partielle Oxidation verwendet werden. Natürlich sind auch noch andere Verwendungsmöglichkeiten denkbar. Insbesondere kann der Rektor überall dort verwendet werden, wo exotherme und/oder endotherme Reaktionen auftreten und eine Wärmeübertragung stattfinden muß. Wenn der Reaktor als sogenannter Membranreaktor ausgebildet ist, kann er beispielsweise als Brennstoffzelle, zur Gasreinigung, zur Gasbefeuchtung, zur Gastrocknung, zur Gastrennung und dergleichen verwendet werden.

Bei einem Reformer handelt es sich allgemein um einen Reaktor, in dem Reformierungsprozesse ablaufen, etwa solche Prozesse, bei denen Medien katalytisch umgesetzt werden. Dabei können Reformierungsreaktoren sowohl Bereiche mit exothermen Reaktionen als auch Bereiche mit endothermen Reaktionen aufweisen.

Vorteilhaft kann ein wie vorstehend beschriebener erfindungsgemäßer Reaktor, insbesondere in der zuvor beschriebenen bevorzugten Verwendungsweise, in einem Brennstoffzellensystem verwendet werden.

Brennstoffzellen sind bereits seit langem bekannt und haben insbesondere im Bereich der Automobilindustrie in den letzten Jahren erheblich an Bedeutung gewonnen. Ähnlich wie Batteriesysteme erzeugen Brennstoffzellen elektrische Energie auf chemischem Wege, wobei die einzelnen Reaktanten kontinuierlich zugeführt und die Reaktionsprodukte kontinuierlich abgeführt werden. Dabei liegt den Brennstoffzellen die Funktionsweise zu Grunde, daß sich elektrisch neutrale Moleküle oder Atome miteinander verbinden und dabei Elektronen austauschen. Dieser Vorgang wird als Redoxprozeß bezeichnet. Bei der Brennstoffzelle werden die Oxidations- und Reduktionsprozesse über eine Membran räumlich getrennt. Solche Membranen haben die Eigenschaft, lonen auszutauschen, Gase jedoch zurückzuhalten. Die bei der Reduktion abgegebenen Elektronen lassen sich als elektrischer Strom durch einen Verbraucher leiten, beispielsweise den Elektromotor eines Automobils.

Als gasförmige Reaktionspartner für die Brennstoffzelle werden beispielsweise Wasserstoff als Brennstoff und Sauerstoff als Oxidationsmittel verwendet. Will man die Brennstoffzelle mit einem leicht verfügbaren oder leicht zu speichernden Brennstoff wie Erdgas, Methanol, Benzin oder dergleichen betreiben, muß man den Kohlenwasserstoff in einer Anordnung zum Erzeugen/Aufbereiten eines Brennstoffs zunächst in ein wasserstoffreiches Gas umwandeln. Bei einigen der in der Anordnung zum Erzeugen/Aufbereiten des Brennstoffs eingesetzten Bauelemente handelt es sich beispielsweise um Reaktoren, etwa um Verdampfer, Reformer, katalytische Brenner und dergleichen. Der Verdampfer hat die Aufgabe, den Ausgangsstoff für den Brennstoff zunächst zu verdampfen, bevor dieser in dampfförmigem Zustand zur weiteren Aufbereitung in das nächste Reaktorelement, beispielsweise einen Reformer, eingeleitet wird. Wird für einzelne Reaktionen in Reaktorelementen Wärme benötigt, kann diese Wärme beispielsweise über einen katalytischen Brenner, einen Wärmetauscher oder dergleichen zur Verfügung gestellt werden. Alle vorgenannten Reaktorelemente können in Form eines erfindungsgemäßen Reaktors ausgebildet sein.

Die Erfindung wird nun an Hand von Ausführungsbeispielen unter Bezugnahme auf die beiliegende Zeichnung näher erläutert. Es zeigen:
Figur 1 eine perspektivische Explosionsansicht einer ersten Ausführungsform eines erfindungsgemäßen Reaktors;
Figur 2 eine perspektivische Ansicht des Reaktors gemäß Figur 1 in zusammengebautem Zustand;
Figur 3 eine teilgeschnittene Ansicht des Reaktors gemäß Figur 2;
Figur 4 eine perspektivische Explosionsansicht eines weiteren Ausführungsbeispiels des erfindungsgemäßen Reaktors;
Figur 5 eine perspektivische Ansicht des Reaktors gemäß Figur 4 in zusammengebautem Zustand;
Figur 6 eine teilgeschnittene Ansicht des in Figur 5 dargestellten Reaktors; und
Figur 7 eine schematische Querschnittsansicht eines anderen Ausführungsbeispiels eines erfindungsgemäßen Reaktors, der als Wärmetauscher ausgebildet ist.

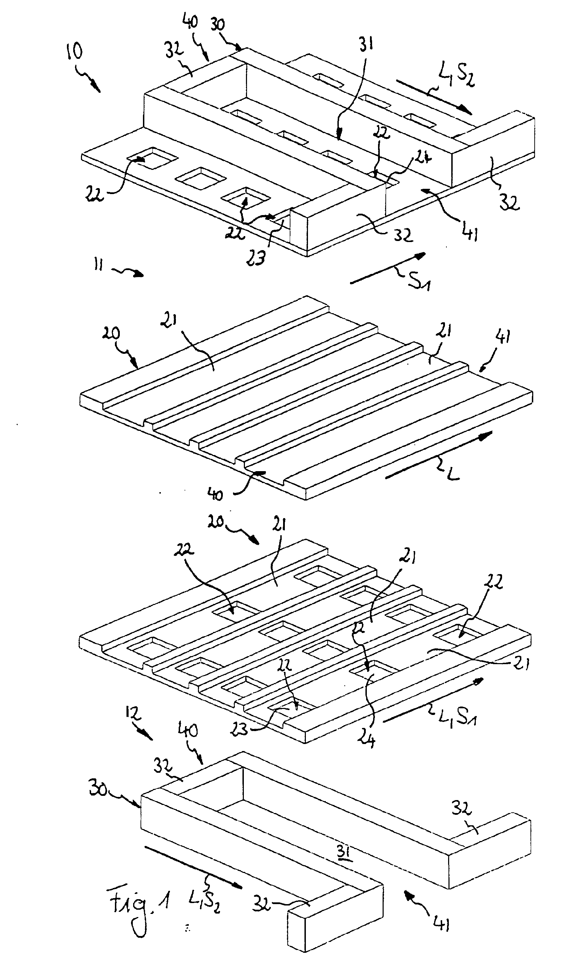

In den Figuren 1 bis 3 ist ein Ausführungsbeispiel für einen Reaktor 10 dargestellt, der jeweils aus zwei Reaktorelementen 11, 12 besteht. Grundsätzlich ist der Reaktor 10 universell einsetzbar, das heißt, daß er für eine Vielzahl von Anwendungsmöglichkeiten verwendet werden kann. Auch kann der Reaktor 10 eine beliebige Dimensionierung aufweisen, so daß der Reaktor 10 für verschiedenste Anwendungsfälle eingesetzt werden kann. So ist es beispielsweise denkbar, daß der Reaktor 10 entweder als Großreaktor oder aber auch in Form eines Mikroreaktors zum Einsatz kommen kann.

Der Reaktor 10 gemäß den Figuren 1 bis 3 besteht aus den beiden Reaktorelementen 11 und 12, die wiederum als Schichtenfolge von zwei Schichten 20, 30 mit einer Kanalstruktur ausgebildet sind. Bei den Schichten 20, 30 handelt es sich um die erste und zweite funktionale Einheit. Hierbei ist pro Reaktorelement 11 beziehungsweise 12 zunächst eine erste Schicht 20 vorgesehen, die eine Anzahl von Kanälen 21 aufweist. Weiterhin ist jeweils eine zweite Schicht 30 vorgesehen, die ebenfalls eine Anzahl von Kanälen 31 aufweist. Die einzelnen Kanäle 21, 31 sind von wenigstens einem Medium durchströmbar, beziehungsweise werden während des Betriebs des Reaktors 10 von wenigstens einem Medium durchströmt.

Jeder der Kanäle 21, 31 weist eine Längsausdehnung auf, die jeweils durch einen Pfeil L angegeben wird. Die Längsausdehnung L der Kanäle 21, 31 erstreckt sich von einer Kanal-Einlaßseite 40 hin zu einer Kanal-Auslaßseite 41.

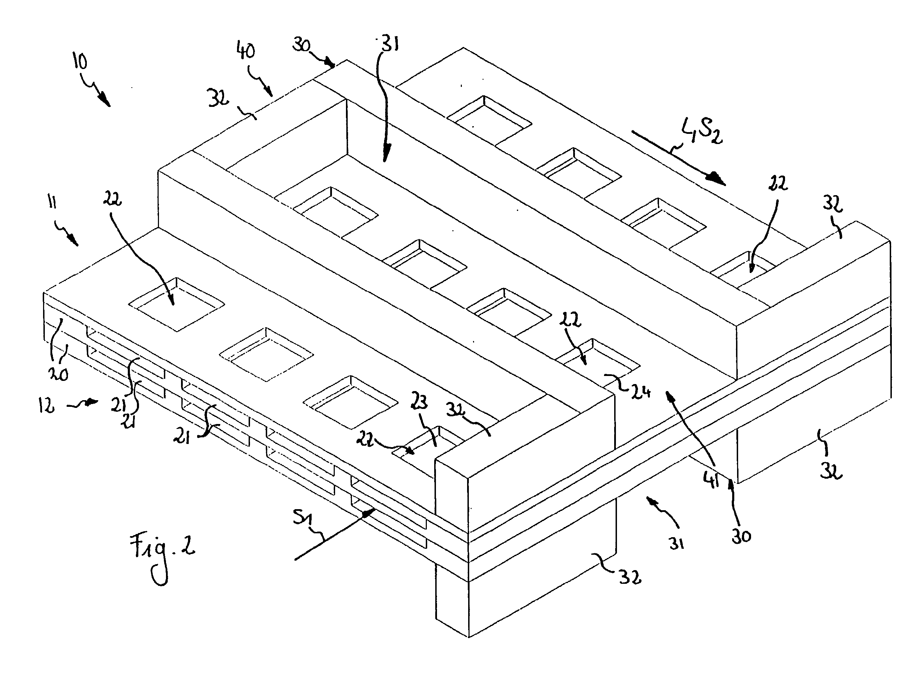

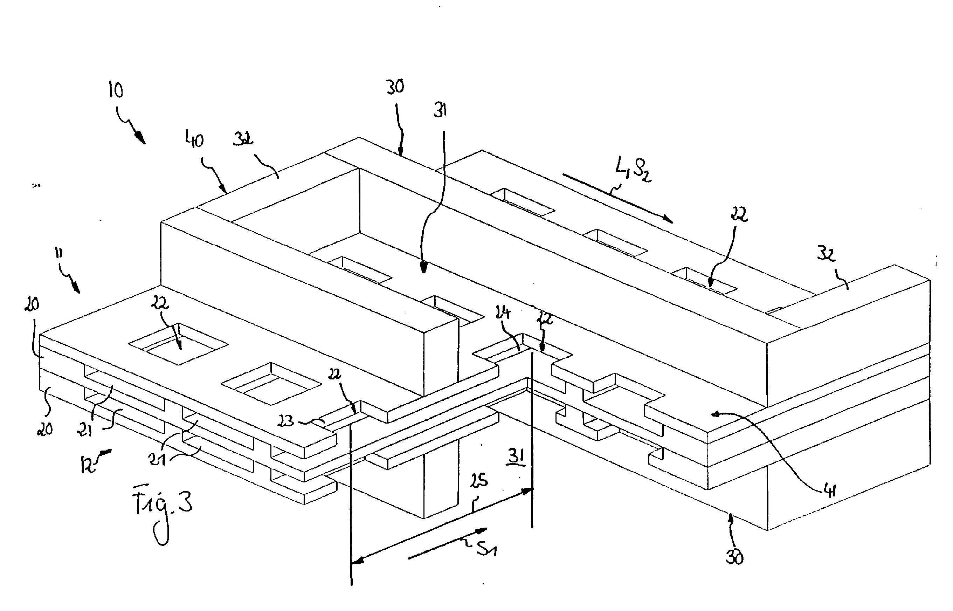

Die beiden Reaktorelemente 11, 12 sind in ihrem Grundaufbau identisch, so daß der Reaktor 10 in zusammengebautem Zustand, wie er in den Figuren 2 und 3 dargestellt ist, eine Sandwichstruktur aufweist, wobei die beiden ersten Schichten 20 mit den Kanälen 21 jeweils von einer zweiten Schicht 30 mit Kanälen 31 eingefaßt sind. Die einzelnen Schichten 20, 30 sind plattenförmig aufgebaut, wobei sich die einzelnen Kanäle 21, 31 auf beziehungsweise innerhalb von diesen Platten befinden. Beispielsweise können die Platten 20, 30 hergestellt werden, indem die Kanäle in diese Platte eingebracht, beispielsweise eingefräst, werden. Bei einer derart ausgestalteten Platte handelt es sich beispielsweise um die erste Schicht 20 mit den Kanälen 21.

Ebenso ist es denkbar, daß die Platten zunächst in Form einer Grundplatte hergestellt werden, auf die dann die Kanalwände aufgebracht, beispielsweise aufgeschweißt werden. Die in den Figuren 1 bis 3 dargestellte zweite Schicht 30 mit den Kanälen 31 kann auf eine solche Art und Weise hergestellt sein. Wenn der Reaktor 10 als Mikroreaktor ausgebildet ist, werden vorteilhaft alle Schichten mit plattenförmigem Aufbau derart hergestellt, daß die Kanäle in die bereits bestehende Platte eingebracht werden.

Wie aus den Figuren 1 bis 3 weiterhin ersichtlich ist, weist jeder Kanal 21 der ersten Schichten 20 über seine Längsausdehnung L eine Anzahl von Verbindungsstellen 22 zur Verbindung mit einem oder mehreren Kanal/Kanälen 31 der wenigstens einen zweiten Schicht 30 auf. Im vorliegenden Ausführungsbeispiel sind diese Verbindungsstellen 22 als Öffnungen zwischen den Kanälen 21 und 23 ausgebildet.

Über die Verbindungsstellen beziehungsweise Öffnungen 22 kann ein Austausch von Medium zwischen den Kanälen 21, 31 der ersten Schichten 20 und zweiten Schichten 30 stattfinden.

Wie aus den Figuren 1 bis 3 weiterhin ersichtlich ist, bilden zwei in Längsausdehnung L eines Kanals 21 der ersten Schichten 20 hintereinander liegende Öffnungen 22 einen Medium-Einlaß 23 und einen Medium-Auslaß 24. Diese begrenzen jeweils einen Kanalabschnitt 25, wie dies aus Figur 3 ersichtlich ist.

Der Reaktor 10 gemäß den Figuren 1 bis 3 weist eine Konfiguration auf, bei der die Längsausdehnung L der Kanäle 21 jeweils senkrecht zur Längsausdehnung L der Kanäle 31 ausgerichtet ist. Weiterhin sind die einzelnen Reaktorelemente 11, 12 in Parallelstrom-Bauweise ausgerichtet.

Die Funktionsweise des in den Figuren 1 bis 3 dargestellten Reaktors 10 wird nun an Hand eines konkreten Beispiels erläutert, wobei der Reaktor 10 als katalytischer Brenner fungiert.

Die Aufgabe eines katalytischen Brenners besteht darin, Wärme zu erzeugen, die dann anschließend anderen Prozessen, Reaktionen beziehungsweise Verbrauchern zur Verfügung gestellt werden kann. Dazu sind Kanäle des katalytischen Brenners mit einem Katalysatormaterial beschichtet, welches aktiv für ein Medium ist, das durch die Kanäle hindurchströmt. Während nun das Medium die Kanäle durchströmt, reagiert es am Katalysatormaterial innerhalb der Kanäle, wodurch nutzbare Wärme freigesetzt wird.

Bei dem in den Figuren 1 bis 3 dargestellten Reaktor 10 sind die Kanäle 21 der Schichten 20 jeweils mit Katalysatormaterial beschichtet. Um die Kanäle 21 beziehungsweise das darin befindliche Katalysatormaterial mit dem Medium in Verbindung zu bringen, werden die Kanäle 21 über die Öffnungen 22 von den Kanälen 31 der zweiten Schichten 30 angesteuert. Dazu strömt das Medium in Strömungsrichtung S2, also in Längsrichtung L der Kanäle 31 von der Einlaßseite 40 der Kanäle 31 hin zu deren Auslaßseite 41.

Wie aus den Figuren 1 bis 3 ersichtlich ist, sind einige Kanäle 31 der zweiten Schichten 30 an der Einlaßseite 40 über ein Verschlußelemente 32 geschlossen. Im vorliegenden Ausführungsbeispiel ist jeweils jeder zweite Kanal 31 auf solch eine Weise an seiner Einlaßseite 40 verschlossen. Die Aufgabe des Verschlußelements 32 besteht darin, ein Zurückströmen des Mediums in Richtung der Einlaßseite 40 zu verhindern, so daß sich der Strom des Mediums insgesamt nur in Richtung S2 bewegen kann.

Wenn nun die an der Einlaßseite 40 offenen Kanäle 31 der zweiten Schicht 30 von dem Medium durchströmt werden, im vorliegenden Ausführungsbeispiel also der linke und der rechte Kanal, während der verschlossene mittlere Kanal nicht angeströmt wird, tritt das Medium über die als Medium-Einlaß 23 fungierende Öffnung 22 in den darunter liegenden Kanal 21 ein. In diesem Kanal bewegt sich das Medium nun in Strömungsrichtung S1, die im vorliegenden Ausführungsbeispiel senkrecht zur Strömungsrichtung S2 in den Kanälen 31 ausgerichtet ist. Wenn das Medium den Medium-Auslaß 24 erreicht, bei dem es sich um eine Öffnung 22 zu dem mit dem Verschlußelement 32 verschlossenen Kanal 31 handelt, tritt das Medium über den Medium-Auslaß 24 aus dem Kanal 21 der ersten Schicht 20 aus und in den entsprechenden Kanal 31 der zweiten Schicht 30 ein. In diesem Kanal 31 bewegt sich das Medium nun in Strömungsrichtung S2 weiter.

Während das Medium den Kanal 21 durchströmt, befindet es sich in dem zwischen dem Medium-Einlaß 23 und dem Medium-Auslaß 24 liegenden Kanalabschnitt 25, der nur einen geringen Teilbereich des Kanals 21 ausmacht. In diesem Kanalabschnitt 25 reagiert das Medium am darin befindlichen Katalysatormaterial, wobei auf Grund der exothermen Reaktion Wärme entsteht. Wie im Rahmen der Beschreibungseinleitung weiter oben bereits dargelegt wurde, bestand bei herkömmlichen katalytischen Brennern das Problem, daß im Eintrittsbereich der Kanäle eine starke exotherme Reaktion stattfand, die sich im weiteren Verlauf der Kanäle immer mehr abschwächte. Dieses Problem kann mit der erfindungsgemäßen Ausgestaltung des Reaktors 10 verhindert werden, da die Kanäle 21 nunmehr in eine Reihe von Kanalabschnitten 25 aufgeteilt sind, und jeder der Kanalabschnitte 25 von seiner Länge her einen Bereich umfaßt, der in seiner Länge dem "Eintrittsbereich" eines Kanals bei einem herkömmlichen katalytischen Brenner entspricht. Ein nachteiliges Abflachen der Reaktionsstärke kann bei der erfindungsgemäßen Ausgestaltung des Reaktors 10 vermieden werden, da das Medium nach der anfänglich starken Reaktion aus dem Kanal 21 wieder austritt, bevor die Reaktionsstärke abflacht.

Durch die erfindungsgemäße Ausgestaltung des Reaktors 10 wird erreicht, daß das Medium in den Kanälen 21, beziehungsweise den entsprechenden Kanalabschnitten 25, jeweils nur eine kurze Verweildauer haben kann. Dadurch lassen sich die katalytischen Reaktionen besonders effizient und einfach steuern. Weiterhin ist jeder Teilbereich der Kanäle 21 optimal für die ablaufenden katalytischen Reaktionen ausgenutzt. Da sich in jedem Kanal 21 jeweils eine Anzahl von Kanalabschnitten 25 befindet, weist jeder Kanal 21 eine Vielzahl von Kontaktzentren auf, in denen das Medium für jeweils nur eine kurze Kontaktzeit mit dem katalytischen Material in Kontakt kommt. Dadurch läßt sich das bei herkömmlichen katalytischen Brennem mit Kanalstruktur auftretende nachteilige, abnehmende Konzentrationsprofil über den Weg vermeiden.

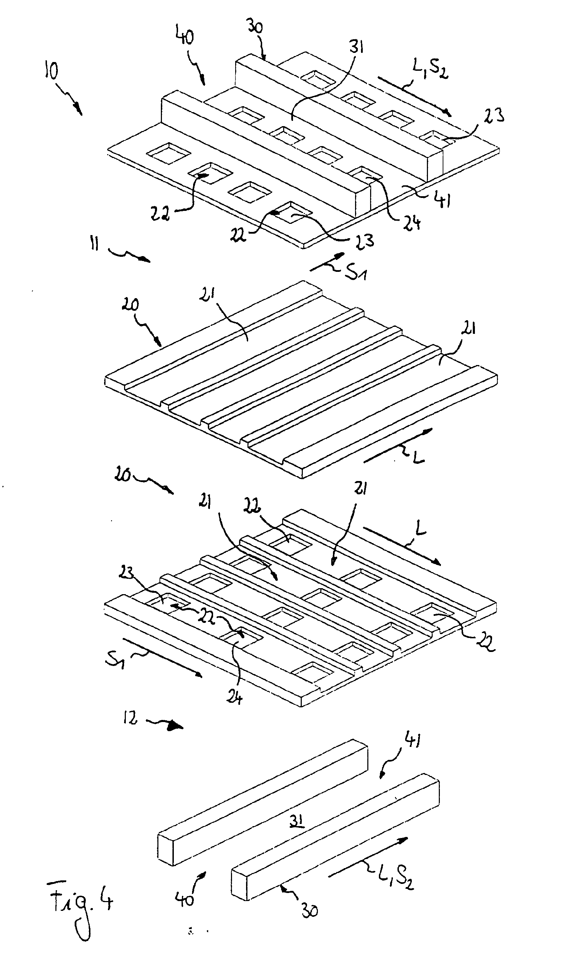

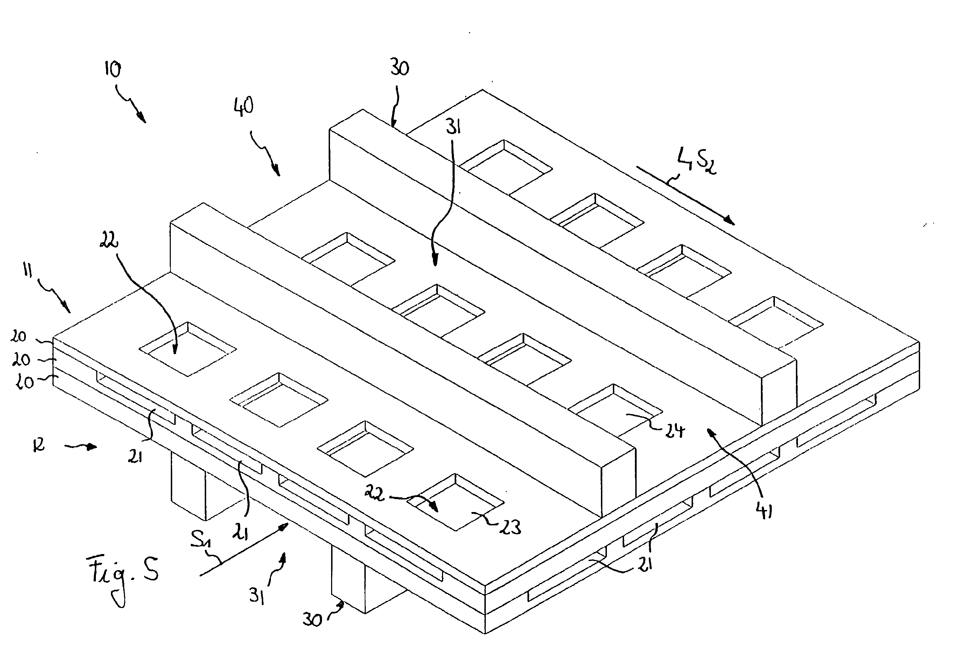

In den Figuren 4 bis 6 ist eine weitere Ausführungsform eines erfindungsgemäßen Reaktors dargestellt, die in ihrem Grundaufbau im wesentlichen dem Reaktor 10 gemäß den Figuren 1 bis 3 entspricht, so daß gleiche Bauelemente mit identischen Bezugsziffern versehen werden. Zur Vermeidung von Wiederholungen wird auf eine erneute Beschreibung des Aufbaus des Reaktors 10 verzichtet und statt dessen auf die entsprechenden Ausführungen im Zusammenhang mit den Figuren 1 bis 3 verwiesen.

Im Unterschied zu dem Ausführungsbeispiel gemäß den Figuren 1 bis 3 ist bei dem Ausführungsbeispiel nach den Figuren 4 bis 6 ein Reaktor 10 dargestellt, bei dem die einzelnen Reaktorelemente 11, 12 in Kreuzstrom-Bauweise zueinander ausgerichtet sind. Die Auslegung des Reaktors 10 im Kreuzstrom-Prinzip hat eine Vereinfachung des konstruktiven Aufbaus des Reaktors 10 zur Folge, weil die entsprechenden Zuund Abflüsse der jeweiligen Kanalsysteme einfach auf vier verschiedenen Seiten des Reaktors 10 angeordnet werden können. Dies ist beispielsweise dann besonders relevant, wenn mehrere Einfach- oder Doppelschicht-Systeme gestapelt werden sollen, oder aber der Reaktor etwa in Mikrostrukturtechnik ausgebildet werden soll.

Nachfolgend wird die Funktionsweise eines solchen Reaktors 10 beschrieben.

Die einzelnen Kanäle 21 der entsprechenden ersten Schichten 20 sollen wiederum mit einem katalytischen Material beschichtet sein.

Wenn nun die Kanäle 31 der zweiten Schicht 30 des ersten Reaktorelements 11 von einem Medium in Strömungsrichtung S2, das heißt in Längsausdehnung L der Kanäle 31, durchströmt werden, tritt das Medium, wie beim Ausführungsbeispiel gemäß den Figuren 1 bis 3, über eine als Medium-Einlaß 23 ausgebildete Öffnung 22 in den darunter liegenden Kanal 21 ein, bewegt sich dort bis zur nächsten Öffnung 22, die die Funktion eines Medium-Auslasses 24 hat und tritt über diesen Auslaß 24 erneut in einen Kanal 31 der zweiten Schicht 30 ein, von wo es aus in Strömungsrichtung S2 weiterströmt. In dem zwischen dem Medium-Einlaß 23 und dem Medium-Auslaß 24 liegenden Kanalabschnitt 25 reagiert das Medium in der vorgenannten Weise und mit den vorstehend beschriebenen vorteilhaften Effekten an dem im Kanal 21 vorhandenen katalytischen Material. Das Reaktorelement 11 fungiert somit als katalytischer Brenner, der für weitere Prozesse benötigte Wärme erzeugt und zur Verfügung stellt.

Das mit dem Reaktorelement 11 verbundene Reaktorelement 12 ist hingegen als Reformereinheit ausgebildet. Die beiden Reaktorelemente 11, 12 sind über ihre jeweiligen ersten Schichten 20 derart miteinander verbunden, daß zwischen den Reaktorelementen 11, 12, insbesondere über die jeweiligen ersten Schichten 20 ein Wärmeaustausch stattfinden kann. Das bedeutet, daß die im Reaktorelement 11 erzeugte Wärme auf das Reaktorelement 12 übertragen werden kann, wo sie für weitere, endotherme Prozesse verwendet werden kann.

Die Aufgabe eines Reformers besteht grundsätzlich darin, ein Medium katalytisch umzusetzen, wobei in manchen Fällen, beispielsweise bei der Dampfreformierung, Wärme benötigt wird. Diese Umsetzung kann beispielsweise derart erfolgen, daß ein Kanal, der mit einem entsprechenden katalytischen Material beschichtet wird, vom umzusetzenden Medium durchströmt wird. Während dieser Durchströmung reagiert das Medium am katalytischen Material, wodurch das Medium in der gewünschten Weise reformiert wird.

Diese Reformierung erfolgt bei dem Ausführungsbeispiel gemäß den Figuren 4 bis 6 im Reaktorelement 12. Die dabei ablaufenden Verfahrensschritte entsprechen grundsätzlich den zu dem katalytischen Brenner gemachten Ausführungen, so daß zur Vermeidung von Wiederholungen auf diese Ausführungen verwiesen wird.

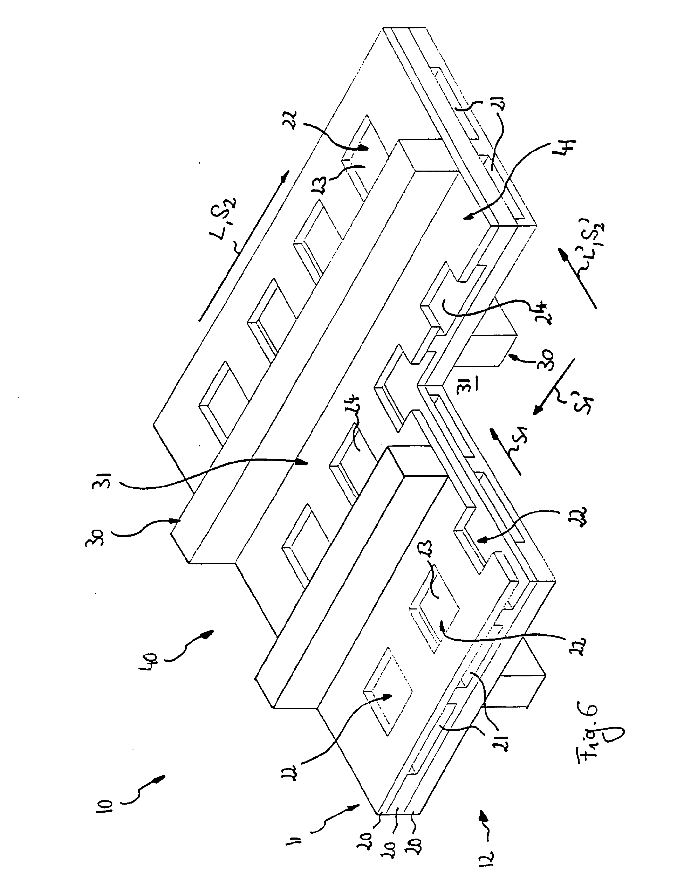

Das zu reformierende Medium durchströmt die Kanäle 31 der zweiten Schicht 30 von Reaktorelement 12 in Strömungsrichtung S2', die der Längsausdehnung L' der Kanäle 31 entspricht. Wie insbesondere aus Figur 6 zu ersehen ist, ist die Strömungsrichtung S2' beziehungsweise die Längsausdehnung L' senkrecht zur Längsausdehnung L der Kanäle 31 des Reaktorelements 11 beziehungsweise zur Strömungsrichtung S2 des diese Kanäle durchströmenden Mediums ausgerichtet.

In wie in bezug auf die zuvor beschriebenen katalytischen Brenner ähnlicher Weise tritt das Medium über als Medium-Einlässe 23 ausgebildete Öffnungen 22 in jeweils einen Kanal 21 der ersten Schicht 20 ein, durchströmt diesen entlang eines Kanalabschnitts 25 und tritt anschließend über jeweils eine als Medium-Auslaß 24 ausgebildete Öffnung 22 aus dem Kanal 21 aus und in einen anderen Kanal 31 der zweiten Schicht 30 ein. Während das Medium den Kanalabschnitt 25 eines Kanals 21 der ersten Schicht 20 durchströmt, reagiert es am darin befindlichen katalytischen Material, wodurch das Medium in gewünschter Weise reformiert wird. Die für die Reaktion erforderliche Wärme wird von dem als katalytischer Brenner ausgebildeten Reaktorelement 11 bereitgestellt. Wie aus Figur 6 ersichtlich ist, ist dabei die Strömungsrichtung S1' des Mediums in den Kanälen 21 senkrecht zur Strömungsrichtung S1 des Mediums in den Kanälen 21 des Reaktorelements 11 ausgerichtet.

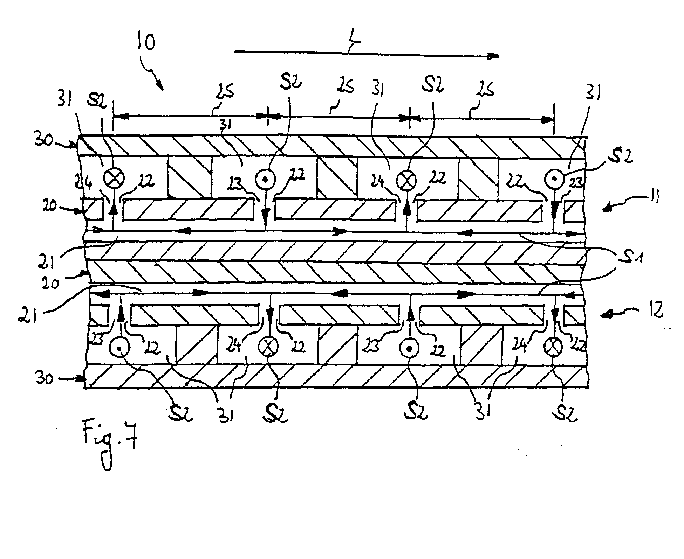

In Figur 7 ist schematisch ein als Wärmetauscher ausgebildeter Reaktor 10 dargestellt, an dem die grundsätzliche Funktionsweise des erfindungsgemäßen Reaktors 10 noch einmal verdeutlicht werden soll.

Der in Figur 7 dargestellte Reaktor 10 weist zwei in ihrem Aufbau im wesentlichen identische Reaktorelemente 11, 12 auf, die jeweils aus einer ersten Schicht 20 beziehungsweise einer zweiten Schicht 30 gebildet sind. Jede der Schichten 20, 30 weist eine Anzahl von Kanälen 21, 31 auf.

Wie bei den zuvor beschriebenen Ausführungsbeispielen sind die Kanäle 21, 31 über als Öffnungen ausgebildete Verbindungsstellen 22 miteinander verbunden, wobei jeweils zwei in Längsausdehnung eines Kanals 21 der ersten Schicht 20 hintereinander liegende Verbindungsstellen 22 jeweils einen Medium-Einlaß 23 und einen Medium-Auslaß 24 bilden, die jeweils einen Kanalabschnitt 25 begrenzen.

In dem Ausführungsbeispiel gemäß Figur 7 soll das erste Reaktorelement 11 mit einem Heizmedium durchströmt werden, während das Reaktorelement 12 von einem zu erhitzenden Medium durchströmt werden soll. Die jeweilige Strömungsrichtung der Medien ist durch entsprechende Pfeile gekennzeichnet. Der in den Kanälen 31 dargestellte "Kreis mit Kreuz" symbolisiert eine Strömungsrichtung, die "in das Zeichnungsblatt hinein" gerichtet ist. Der "Kreis mit Punkt" in den Kanälen 31 symbolisiert hingegen eine Strömungsrichtung, die aus dem "Zeichnungsblatt heraus gerichtet" ist.

Zur Beschreibung der Funktionsweise des Reaktors 10 wird nunmehr zunächst derjenige Kanal 31 der zweiten Schicht 30 betrachtet, der in der Zeichnung als zweiter von links dargestellt ist. Das diesen Kanal 31 durchströmende Heizmedium strömt in Strömungsrichtung S2 in eine Richtung, die "aus dem Zeichnungsblatt heraus gerichtet" ist. Das Heizmedium tritt über die als Medium-Einlaß 23 ausgebildete Öffnung 22 in Pfeilrichtung in den Kanal 21 ein und strömt dort in Strömungsrichtung S1 sowohl nach links als auch nach rechts. Sobald das Heizmedium die nächste Öffnung 22, bei der es sich in diesem Fall um einen Medium-Auslaß 24 handelt, erreicht, tritt das Medium über die Öffnung 22 erneut in einen Kanal 31 ein, wo es in Strömungsrichtung S2 beispielsweise in eine "in das Zeichnungsblatt hinein gerichtete Richtung" strömt. So kann beispielsweise ein Kreislauf gebildet werden, in dem das Heizmedium vor dem nächsten Zyklus erneut erhitzt werden kann. Ebenso ist es denkbar, daß das Medium in allen Kanälen 31 in derselben Strömungsrichtung S2 strömt.

Wie aus Figur 7 weiterhin ersichtlich ist, wird zwischen jedem Medium-Einlaß 23 und jedem Medium-Auslaß 24 ein Kanalabschnitt 25 des Kanals 21 gebildet. Der ursprünglich lange Kanal 21 wird somit in viele kurze Kanalabschnitte 25 unterteilt, so daß sich eine Vielzahl von Kontaktzentren bildet, wobei das Medium in jedem der Kanalabschnitte 25 nur eine kurze Verweildauer hat.

Durch die unterschiedliche Größe der Kanäle 31 und 21 wird weiterhin erreicht, daß ein Druckverlust weitestgehend vermieden werden kann. Dabei werden viele kleinere, kurze Kanalabschnitte 25 von jeweils weniger, größeren Kanälen 31 angesteuert.

Natürlich ist der Reaktor nicht nur auf zwei solcher Schichten beschränkt. Vielmehr können noch weitere, dritte Schichten vorgesehen sein. Diese können ähnlich der beschriebenen Weise, beispielsweise rein als Medium-Einlässe oder Medium-Auslässe, Kanäle der zweiten Schichten ansteuern. Dabei können die Kanäle der dritten, und womöglich weiterer Schichten größer als die angesteuerten Kanäle der jeweils zweiten Schichten sein. Dadurch entsteht eine hierarchische Struktur von unterschiedlich großen Kanälen mit den im Rahmen der allgemeinen Beschreibung weiter oben genannten Vorteilen.

In ähnlicher Weise wird das Reaktorelement 12 mit dem zu erwärmenden Medium durchströmt. Dabei werden die einzelnen Kanäle 31, 21 derart vom Medium durchströmt, daß sich die die jeweiligen Kanäle 21 der Reaktorelemente 11 und 12 durchströmenden Medien jeweils im Gegenstrom befinden. In den Kanalabschnitten 25 wird die Wärme des Heizmediums aus Reaktorelement 11 über die Wände der Kanäle 21 auf das zu erwärmende Medium im gegenüber liegenden Kanalabschnitt 25 des Reaktorelements 12 übertragen.

Auf Grund der Aufteilung der Kanäle 21 in eine Vielzahl von Kanalabschnitten 25 kann jeder Teil des Kanals 21 optimal für die Wärmeübertragung genutzt werden. Ein solcher Wärmetauscher ist besonders gut geeignet, um sensible Bauelemente, wie beispielsweise Halbleiterbauelemente und dergleichen, zu kühlen.

### Bezugszeichenliste

- 10 =: Reaktor
- 11 =: Reaktorelement
- 12 =: Reaktorelement

- 20 =: erste Schicht (erste funktionale Einheit)
- 21 =: Kanal
- 22 =: Verbindungsstelle (Öffnung)
- 23 =: Medium-Einlaß
- 24 =: Medium-Auslaß
- 25 =: Kanalabschnitt

- 30 =: zweite Schicht (zweite funktionale Einheit)
- 31 =: Kanal
- 32 =: Verschlußelement

- 40 =: Kanal-Einlaßseite
- 41 =: Kanal-Auslaßseite

- L, L' =: Längsausdehnung der Kanäle
- S1, S1' =: Strömungsrichtung des Mediums in der ersten Schicht
- S2, S2' =: Strömungsrichtung des Mediums in der zweiten Schicht

## Patentansprüche

1. Reaktor, mit wenigstens einem Reaktorelement (11, 12), das aus wenigstens zwei funktionalen Einheiten (20, 30) mit einer Kanalstruktur, die von wenigstens einem Medium durchströmbar sind oder durchströmt werden, ausgebildet ist, mit wenigstens einer ersten funktionalen Einheit (20), die eine Anzahl von Kanälen (21) aufweist, und mit wenigstens einer zweiten funktionalen Einheit (30), die eine Anzahl von Kanälen (31) aufweist, **dadurch gekennzeichnet, daß** jeder Kanal (21) der ersten funktionalen Einheit(en) (20) über seine Längsausdehnung (L) eine Anzahl von Verbindungsstellen (22) zur Verbindung mit einem oder mehreren Kanal/Kanälen (31) der wenigstens einen zweiten funktionalen Einheit (30) aufweist, über die ein Austausch von Medium zwischen den Kanälen (21, 31) der ersten (20) und zweiten (30) funktionalen Einheit(en) stattfindet oder stattfinden kann und daß die Kanäle (21) der ersten funktionalen Einheit(en) (20) in eine Anzahl von von wenigstens zwei Verbindungsstellen (22) begrenzten Kanalabschnitten (25) aufgeteilt sind.

2. Reaktor nach Anspruch 1, **dadurch gekennzeichnet, daß** die wenigstens zwei funktionalen Einheiten (20, 30) als Schichtenfolge von wenigstens zwei Schichten ausgebildet sind, mit wenigstens einer ersten Schicht (20), die eine Anzahl von Kanälen (21) aufweist und mit wenigstens einer zweiten Schicht (30), die eine Anzahl von Kanälen (31) aufweist.

3. Reaktor nach Anspruch 1 oder 2, **dadurch gekennzeichnet, daß** zwei in Längsausdehnung (L) eines Kanals (21) der ersten funktionalen Einheit(en) (20) hintereinander liegende Verbindungsstellen (22) einen Medium-Einlaß (23) und einen Medium-Auslaß (24) bilden, die jeweils einen Kanalabschnitt (25) begrenzen.

4. Reaktor nach einem der Ansprüche 1 bis 3, **dadurch gekennzeichnet, daß** zumindest zwischen einzelnen Kanalabschnitten (25) eine Trennwand vorgesehen ist.

5. Reaktor nach einem der Ansprüche 1 bis 4, **dadurch gekennzeichnet, daß** das Reaktorelement (11; 12) wenigstens eine dritte funktionale Einheit mit einer Anzahl von Kanälen aufweist, daß jeder Kanal (31) der zweiten funktionalen Einheit(en) (30) über seine Längsausdehnung (L) eine Anzahl von Verbindungsstellen zur Verbindung mit einem oder mehreren Kanal/Kanälen der wenigstens einen dritten funktionalen Einheit aufweist, über die ein Austausch von Medium zwischen den Kanälen der zweiten (30) und dritten funktionalen Einheit(en) stattfindet oder stattfinden kann.

6. Reaktor nach Anspruch 1 oder 5, **dadurch gekennzeichnet, daß** dieser zwei oder mehr Reaktorelemente (11, 12) aufweist.

7. Reaktor nach Anspruch 6, **dadurch gekennzeichnet, daß** zwischen zwei Reaktorelementen (11, 12) eine Membran vorgesehen ist.

8. Reaktorelement nach Anspruch 7, **dadurch gekennzeichnet, daß** die Membran zwischen zwei ersten funktionalen Einheiten (20) der Reaktorelemente (11, 12) vorgesehen ist und daß die Kanäle (21) der ersten funktionalen Einheit(en) (20) in Richtung der Membran offen sind.

9. Reaktor nach Anspruch 7 oder 8, **dadurch gekennzeichnet, daß** die Membran als Folie oder plattenförmig ausgebildet ist.

10. Reaktor nach einem der Ansprüche 1 bis 9, **dadurch gekennzeichnet, daß** die Kanäle (21, 31) der ersten und zweiten funktionalen Einheit(en) (20, 30) sowie fakultativ der dritten funktionalen Einheit(en) in Kreuzstrom-Bauweise, in Parallelstrom-Bauweise oder in einem Winkel zueinander ausgerichtet sind.

11. Reaktor nach einem der Ansprüche 6 bis 10, **dadurch gekennzeichnet, daß** die einzelnen Reaktorelemente (11, 12) in Kreuzstrom-Bauweise, in Parallelstrom-Bauweise oder in einem Winkel zueinander ausgerichtet sind.

12. Reaktor nach einem der Ansprüche 1 bis 11, **dadurch gekennzeichnet, daß** die Kanäle (21, 31) der ersten und zweiten funktionalen Einheit(en) (20, 30) und fakultativ der dritten funktionalen Einheit(en) direkt aneinander anliegen und daß die Verbindungsstellen (22) als Öffnungen zwischen den Kanälen (20, 30) ausgebildet sind.

13. Reaktor nach einem der Ansprüche 1 bis 12, **dadurch gekennzeichnet, daß** die Kanäle (21, 31) der ersten und zweiten funktionalen Einheit(en) (20, 30) und fakultativ der dritten funktionalen Einheit(en) zur Bildung einer hierarchischen Struktur unterschiedlich groß ausgebildet sind.

14. Reaktor nach Anspruch 13, **dadurch gekennzeichnet, daß** die Kanäle (31) der zweiten funktionalen Einheit(en) (20) größer als die Kanäle (21) der ersten funktionalen Einheit(en) (20) ausgebildet sind.

15. Reaktor nach Anspruch 13 oder 14, **dadurch gekennzeichnet, daß** die Kanäle der dritten funktionalen Einheit(en) größer als die Kanäle (31) der zweiten funktionalen Einheit(en) (30) ausgebildet sind.

16. Reaktor nach einem der Ansprüche 1 bis 15, **dadurch gekennzeichnet, daß** jeder Kanal (21) der ersten funktionalen Einheit(en) (20) über jede seiner Verbindungsstellen (22) mit einem einzigen Kanal (31) der zweiten funktionalen Einheit(en) (30) verbunden ist.

17. Reaktor nach einem der Ansprüche 5 bis 16, **dadurch gekennzeichnet, daß** jeder Kanal (31) der zweiten funktionalen Einheit(en) (30) über jede seiner Verbindungsstellen mit einem einzigen Kanal der dritten funktionalen Einheit(en) verbunden ist.

18. Reaktor nach einem der Ansprüche 1 bis 17, **dadurch gekennzeichnet, daß** das Reaktorelement (11; 12) wenigstens eine erste funktionale Einheit (20) mit einer Anzahl von Kanälen (21) aufweist, die sandwichartig zwischen zwei oder mehr zweiten funktionalen Einheiten (30) mit einer Anzahl von Kanälen (31) angeordnet ist/sind.

19. Reaktor nach einem der Ansprüche 1 bis 18, **dadurch gekennzeichnet, daß** die Kanäle (31) der zweiten funktionalen Einheit(en) (30) und/oder der dritten funktionalen Einheit(en) in Strömungsrichtung (S) des sie durchströmenden Mediums eine Einlaßseite (40) und eine Auslaßseite (41) aufweisen und daß jeweils benachbarte Kanäle einer jeden funktionalen Einheit abwechselnd über ein Verschlußelement (31) an der Einlaßseite (40) und/oder der Auslaßseite (41) geschlossen sind.

20. Reaktor nach einem der Ansprüche 1 bis 19, **dadurch gekennzeichnet, daß** die Kanalstrukturen der einzelnen funktionalen Einheiten (20, 30) aus Rohren gebildet sind.

21. Reaktor nach einem der Ansprüche 1 bis 20, **dadurch gekennzeichnet, daß** die einzelnen funktionalen Einheiten (20, 30) des wenigstens einen Reaktorelements (11, 12) plattenförmig ausgebildet sind und daß die Kanäle (21, 31) innerhalb der Platten oder auf den Platten ausgebildet sind.

22. Reaktor nach einem der Ansprüche 1 bis 21, **dadurch gekennzeichnet, daß** die Kanäle (21, 31) der einzelnen funktionalen Einheiten (20, 30) in Mikrostrukturtechnik ausgebildet sind.

23. Verwendung eines Reaktors (10) nach einem der Ansprüche 1 bis 22, als Wärmetauscher und/oder katalytischer Brenner und/oder Reformer und/oder zur partiellen Oxidation.

24. Verwendung eines Reaktors nach einem der Ansprüche 7 bis 22 als Brennstoffzelle und/oder zur Gastrennung und/oder zur Gastrocknung und/oder zur Gasbefeuchtung und/oder zur Gasreinigung.

25. Verwendung eines Reaktors (10) nach einem der Ansprüche 1 bis 24 in einem Brennstoffzellensystem.
